Europäisches Patentamt

European Patent Office

Office européen des brevets

(11) Publication number: **0 397 300**
**A2**

# EUROPEAN PATENT APPLICATION

(21) Application number: **90301668.1**

(22) Date of filing: **15.02.90**

(51) Int. Cl.⁵: **B60J 10/08**

(30) Priority: **11.05.89 US 350375**

(43) Date of publication of application:
**14.11.90 Bulletin 90/46**

(84) Designated Contracting States:
**BE CH DE ES FR GB IT LI LU NL SE**

(71) Applicant: **GENCORP INC.**
**175 Ghent Road**
**Akron Ohio 44313-3300(US)**

(72) Inventor: **Baker, Scott E.**
**7277 Nottingham Drive**
**Newburgh, Indiana 47630(US)**
Inventor: **Sander, Michael C.**
**4400 Big Cynthiana Road**
**Evansville, Indiana 44712(US)**
Inventor: **Gurganus, Cecil R.**
**6411 Cynthiana Road**
**Evansville, Indiana 44712(US)**

(74) Representative: **Paget, Hugh Charles Edward et al**
**MEWBURN ELLIS 2 Cursitor Street**
**London EC4A 1BQ(GB)**

(54) **Sealing strip and vehicle seal.**

(57) A magnetic seal for sealing a vehicle closure panel to a vehicle body covering an opening in the body therein is positioned between an engagement surface and a sealing surface, on either the vehicle body or vehicle panel and a sealing surface on the other of the vehicle body or vehicle panel. A gap is defined between the closure panel and vehicle body when the closure panel is latched in a closed position by a latch mechanism. To bridge and seal the gap, a seal strip is mounted on the engagement surface and adapted to form an air tight, water tight seal between the vehicle body and vehicle panel.

The seal strip includes a mounting portion for securing the seal strip to the engagement surface, a flexible magnetic portion comprising a tubular member housing an elongate flexible magnet for attracting the sealing surface, and a bellows portion comprising flexible leg members intermediate to and connected with the magnetic portion and mounting portion. The bellows portion is sufficiently flexible to bridge the gap and enable attraction and sealing engagement between the magnetic portion and sealing surface, and is compressible between the sealing and engagement surfaces to substantially avoid interference which limits movement of the vehicle panel to the closed position engaging the latch mechanism.

FIG. 3

## SEALING STRIP AND VEHICLE SEAL

The present invention relates to a seal suitable for the interface between a vehicle body and a vehicle closure panel, and specifically relates to a magnetic vehicle seal for bridging and sealing the gap between a vehicle body and vehicle door when the door is latched in a closed position.

Vehicle seals of the type commonly used in the automotive industry typically include a C-shaped carrier portion of metal reinforced rubber which engages an upstanding flange extending from the vehicle body. A cellular rubber bulb is secured to or integral with the metal carrier to provide a seal in the gap between the vehicle body and associated vehicle closure panel, such as a vehicle door, trunk or hood, when the door is latched in closed position.

In use, the metal carrier and bulb seal provide a liquid and air tight seal when the vehicle door is correctly positioned on the vehicle body for aligned engagement with the seal. It is essential with such seals that the door be correctly positioned on the vehicle body at the proper location in order to obtain an effective seal. Since precise positioning of the door on the vehicle body is necessary to obtain an effective seal, failure of the seals often results due to the difficulty of consistently and precisely positioning each door with respect to the vehicle body. Moreover, despite substantial improvements in automotive building techniques, including the use of lasers to properly position the vehicle components with respect to one another, the seal failure problem has persisted.

Obtaining an effective seal between the vehicle door and vehicle body is further complicated by aging of the vehicle and wear or damage to the respective parts. As the distance from the vehicle body to the closed door increases over time, for example due to settling or sagging of the door within its frame, the positive seal may be lost, resulting in liquid and air leakage especially at high vehicle speeds.

To additionally complicate sealing problems experienced with past seals, vehicle manufacturers have incorporated a new vehicle door design for styling purposes and fuel economy called a "limousine" door. Use of the limousine door design provides the vehicle with a smooth and continuous external surface across the interface of the closed vehicle door surface with the vehicle body surface. In order to provide the smooth external surface, the limousine door projects into the roof line, or horizontal roof portion, of the vehicle body.

The limousine door design further complicates existing sealing problems, by creating a wind tunnel effect at the interface between the closed vehicle door and the vehicle body along the roof line of the vehicle. The wind tunnel effect creates negative pressures at this juncture, which results in air leakage past the seal. The result of this air leakage is an unacceptable noise within the vehicle interior called wind noise.

In an attempt to overcome these sealing and resulting wind noise problems, the size of the seal positioned in the gap between the vehicle body and door was increased. Unfortunately, the increase in seal size has the disadvantage of making the door more difficult to close, since additional closing effort is required to compress the thick cellular bulb of the seal to latch the door in the closed position using the latch mechanism.

An alternative solution which also attempts to overcome the sealing problem uses two rubber bulb seals, one mounted on the vehicle body as described above, and a second seal mounted on the vehicle door so that the seal is accomplished by cooperating engagement between the bulbs. This construction also has the disadvantage of increasing the closing effort needed to latch the door in the closed position.

The present invention provides a new and improved magnetic seal for bridging and sealing the gap between a vehicle body and a vehicle closure panel using a seal strip having a mounting portion for securing the strip to an engagement surface, a magnetic portion housing a flexible magnet for attracting and engaging a sealing surface, and an intermediate flexible bellows portion interconnecting the mounting and magnetic portions. The bellows undergoes compression using minimal manual closing effort to latch the panel with the body, and undergoes some extension under attraction of the magnetic portion to the sealing surface without the seal being broken.

In accordance with one aspect of the invention, the flexible seal strip has an elongate configuration surrounding an opening in the vehicle body for receiving the closure panel. The mounting portion may engage a flange extending from the vehicle body adjacent the opening. The magnetic portion may have a rectangular tube member for housing e.g. a flexible permanent magnet. The magnetic portion may be adapted to engage the sealing surface substantially parallel with the flange and on an adjacent inner edge portion of the closure panel. The bellows portion is preferably integral with and intermediate of the mounting portion and magnetic portion. Desirably it includes two mirror image flexible leg members, in cross-section.

In another application of the invention, the seal strip mounting portion is secured to the engagement surface on the inner edge portion of the closure panel by fastener members engaged with the panel. The sealing surface for engagement with the magnetic portion tube member is preferably on an edge portion of the vehicle body adjacent the opening and substantially parallel therewith.

In a still further embodiment, the mounting portion is preferably a rectangular tube member housing a flexible magnet for attracting and engaging the engagement surface formed by a cooperating rectangular groove in either the vehicle body or closure panel.

To form an air tight, water tight seal using the seal strip embodiments, the panel is moved to a closed position covering the opening, and latched in position by the latch mechanism on the body and panel. When moved to the latched position, the seal strip is compressed between the engagement and sealing surfaces. The bellows portion preferably has a minimum compression height and is sufficiently flexible to avoid interference with the surfaces, and thus minimize the closing effort required to manually move the panel to the latched position. Once in the latched position, the magnetic portion is attracted to the associated sealing surface, and the bellows portion has sufficient extension height and flexibility to enable the magnetic portion to reach, or expand, into engagement with the sealing surface. The magnetic attraction of the magnetic portion to the sealing surface is also strong enough to attract the magnetic portion across the air gap between a surface of the magnet adjacent the sealing surface and the sealing surface, and to resist disengagement of the seal as wind forces are applied at high vehicle speeds.

Other features and advantages of the invention will additionally become apparent from the following detailed description of certain embodiments thereof, made with reference to the attached drawings which set forth in detail certain illustrative embodiments which exemplify of the invention, but provide only a few of the various ways the principles of the present invention may be embodied.

Brief Description of the Drawings

Figure 1 is a perspective view of a portion of a vehicle body having an opening receiving a vehicle closure panel, and having a magnetic seal strip;

Figure 2 is a cross section of a magnetic seal strip;

Figure 3 is a fragmentary cross sectional view of a magnetic seal strip mounted on a vehicle body and engaged with a vehicle closure panel;

Figure 4 is a fragmentary cross sectional view of a second embodiment of the magnetic seal strip, shown mounted on a vehicle closure panel and engaged with a vehicle body; and

Figure 5 is a fragmentary cross sectional view of a still further embodiment of a magnetic seal strip.

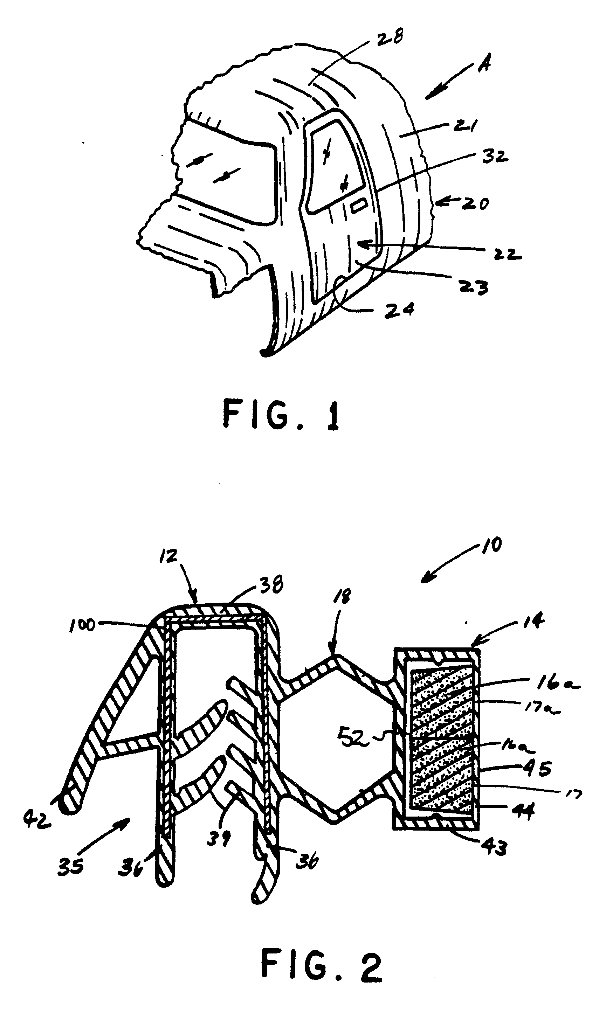

A magnetic seal strip 10 embodying the invention is illustrated in cross section in Figure 2 of the drawings. The magnetic seal strip, indicated generally at 10, includes a mounting portion 12 for securing to an engagement surface on a vehicle body or vehicle closure panel, a magnetic portion 14 housing a flexible permanent magnet 16, 16a, and a bellows portion 18, intermediate to and integral with the adjacent magnetic portion and mounting portion to provide extension and compression, and to support the magnetic portion 14 with respect to the mounting portion 12 when the vehicle closure panel is in latched engagement with the vehicle body.

A vehicle A is illustrated in part in Figure 1 of the drawings, as an example of one general environment of the magnetic seal strip 10. As illustrated in Figure 1, the vehicle A includes the vehicle body 20 having an opening 24 for receiving a cooperating closure panel or door 22 hinged along its front side to the vehicle body. The seal strip embodying the invention extends substantially about the opening 24, intermediate the body 20 and door 22 to form a seal therebetween. In the illustration of the vehicle A in Figure 1, the door 22 is depicted as a limousine door, which provides a continuous smooth surface 28 formed by the outer surface 21 of the vehicle body 22 and outer surface 23 of the vehicle door 22. This aerodynamic external vehicle surface 28 is provided, for example, to assist with reducing air drag and thereby increasing the fuel economy of the vehicle A.

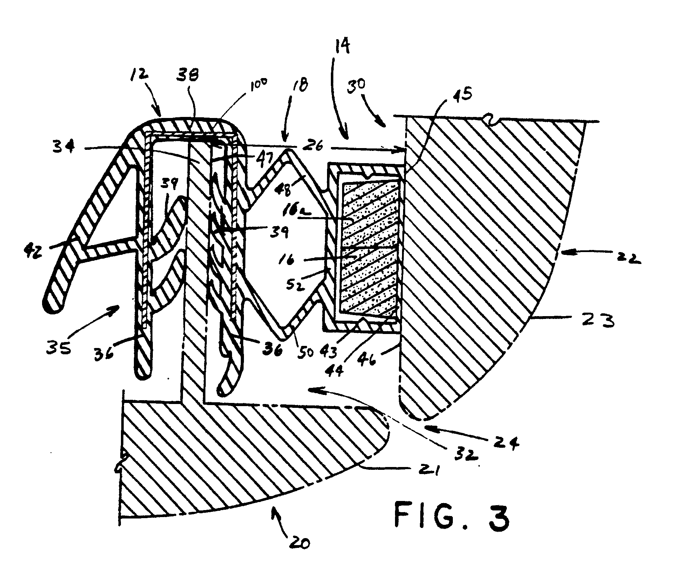

The vehicle door 22 is secured to the vehicle body 20 on an edge portion 32 of the body adjacent the opening 24 by a latch mechanism (not illustrated). The latch mechanism is of the double latch type commonly used by automotive manufacturers. The conventional double latch mechanism enables the door to be secured in a fully latched position when it has been closed with sufficient force. In the fully latched position, the outer surfaces of the door and body form the smooth external vehicle surface 28, and a gap 26 is defined intermediate an inner edge portion 30 of the door 22, and the vehicle body 20 adjacent the opening 24 as shown in Figure 3.

As illustrated in Figures 3-5, the gap 26 is between a sealing surface 46 and an engagement surface 47, one on the inner edge portion of the door and the other on the edge portion of the body adjacent the opening. The seal strip of the present invention is preferably mounted on the engagement surface 47 and extends completely across the gap 26 around the door to fill and seal the space between the body and door against air and water leakage.

In the embodiment of the invention illustrated in Figures 2 and 3, the seal strip mounting portion 12 is attached to the engagement surface 47 formed on a flange 34 extending outwardly from the vehicle body 20 adjacent the opening 24. The mounting portion 12 is an elongate member, preferably having a body 35 including a C-shaped or U-shaped cross sectional configuration defined by generally parallel leg members 36, and an interconnecting base member 38. The legs and base member cooperatively define an opening therebetween for receiving and surrounding the flange 34 when installed on the flange as illustrated in Figure 3. The leg members 36 include gripping fins 39 projecting inwardly from the leg members in a direction away from the throat of the opening in the C-shaped body. A C-shaped metal strip 100 and/or a harder, more rigid polymeric or other material (not illustrated), may additionally be embedded within the mounting portion during manufacture, to provide mounting support for the seal strip on the flange 34. The illustrated mounting portion 12 additionally includes a trim lip 42 extending from the leg member 36 spaced from the bellows portion 18, to provide the seal strip 10 with an improved aesthetic appearance.

As shown in Figure 3, the mounting portion is mounted on the vehicle body by engaging the C-Shaped body 35 with the flange 34 surrounding and adjacent to the opening 24, so that the fins 39 are resiliently deflected and engaged with the flange. The angular configuration of the gripping fins secures the mounting portion on the flange, and resists removal from the flange.

The magnetic portion of the Figure 3 embodiment is a tube member 43 having a rectangular cross sectional configuration, an outer wall 44 of the tube member having a thinner cross section than the remaining three walls. An outer surface 45 of the thin wall 44 engages the sealing surface 46 on an inner edge portion 30 of the vehicle door 22. As shown in Figure 3, the outer surface 45 of the magnetic portion is preferably parallel with the sealing surface 46 to provide full engagement across their respective surfaces to obtain the optimum magnetic attraction between the magnet 16 and sealing surface 46.

The magnet 16 is an elongate flexible permanent magnet supported within the rectangular tube member 43. In the embodiment shown, the magnet 16 includes two elongate flexible permanent magnets 16, 16a, each having a substantially rectangular cross sectional configuration, and respective attraction surfaces 17, 17a positioned parallel to the outer surface 45 of the magnetic portion. Elongate rectangular magnets are preferred due to their flexibility, which enables the magnetic portion and seal strip to conform and be mounted on the rounded periphery of the vehicle body adjacent the opening 24, and for engagement with the corresponding rounded periphery of the vehicle door.

The bellows portion 18 of the preferred seal strip embodiment has a substantially polygonally shaped cross sectional configuration. The bellows portion includes opposite leg members 48, 50 each having two angled sections in mirror image with respect to one another. Each leg member is engaged with and extends between an adjacent wall 52 of the magnetic portion 14 and one leg member 36 of the mounting portion 12. The leg members, 48, 50, the wall 52 and one adjacent leg member 36, cooperatively define therebetween the polygonal shape of the bellows.

In the preferred embodiment of Figure 3, where the seal strip is mounted on an engagement surface 47 on the vehicle body 20, the polygonal shape configuration provides the bellows portion with sufficient rigidity to resist deformation, or sagging, of the magnetic portion with respect to the mounting portion. By maintaining the position of the magnetic portion, the bellows portion enables the attraction surfaces 17, 17a of the magnet, and the thin wall 44 of the magnetic portion, to remain in continuous parallel engagement with the cooperating sealing surface 46. The polygonal shape bellows configuration also preferably provides sufficient flexibility to enable compression of the leg members between the engagement and sealing surfaces 47, 46 during latching of the door, and expansion of the leg members once the door is in the latched position to enable reaching of the magnetic portion to engage the sealing surface 46.

It will be further appreciated that the mirror image cross sectional configuration of the bellows portion illustrated in Figures 3-5, minimizes the closing effort required to move the door 22 to the fully latched position. The minimal closing effort, or the force necessary to move a door with a conventional two stage latch mechanism through engagement with the first latch and into engagement with the second latch in the fully closed and latched position, is obtained due to the negligible force required to compress the bellows portion during movement of the door to the latched position. Alternatively, if the gap 26 exceeds the resting or free height of the seal strip 10, the bellows portion is sufficiently flexible to allow expansion thereof under magnetic attraction to bring the magnetic portion 14 into sealing engagement with the sealing surface 46.

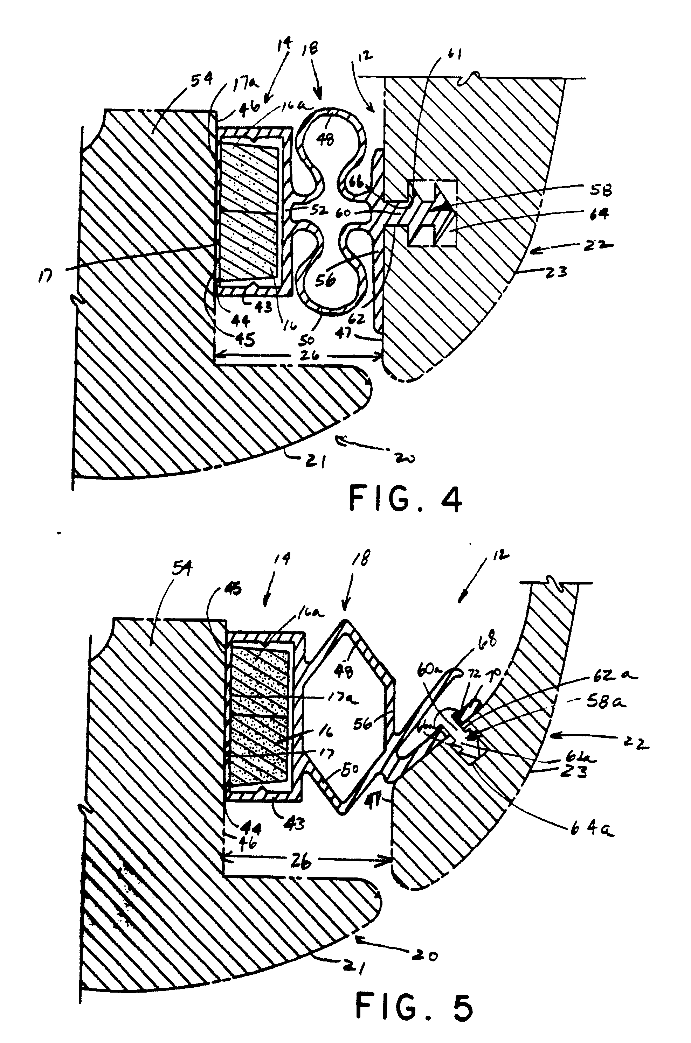

In the embodiment of the invention illustrated in Figure 4, the mounting portion 12 is attached to engagement surface 47 on the inner edge portion 30 of the vehicle door 22. In this embodiment, the magnetic portion 14 is preferably engaged with the vehicle body on a step or well 54 extending around the door opening of the vehicle body 20. The sealing surface 46 on the well 54 is formed for continuous parallel engagement with the thin wall 44 of the magnetic portion rectangular tube member 43.

This alternate embodiment of the invention includes a bellows portion 18 having a substantially figure eight shape cross sectional configuration. The bellows portion includes opposite curved leg members 48, 50 in mirror image with respect to one another, each engaged with and extending between an adjacent wall 52 of the magnetic portion 14 and the mounting portion 12. In the preferred embodiment of Figure 4, where the seal strip is mounted on an engagement surface 47 on the vehicle door 22, the figure eight shape configuration of the bellows portion resists deformation of the magnetic portion with respect to the mounting portion sufficiently for the attraction surfaces 17, 17a of the magnet, and the thin wall 44 of the magnetic portion, to remain in continuous parallel engagement with the sealing surface 46 on the step 54. Similarly with the polygonal shape bellows, the figure eight configuration also provides sufficient flexibility to enable expansion and compression of the leg members between the sealing and engagement surfaces 46, 47 upon latching of the door, and reaching of the magnetic portion to engage the step 54.

The mounting portion 12 preferably has a wall 56 integrally formed with the leg members 48, 50 of the bellows portion. An integral fastener, indicated generally at 58, projects outwardly from the wall 56 in a direction away from the bellows portion. The fastener 58 includes a shaft portion 60 and an arrowhead lock member 61. The arrowhead lock member 61 extends outwardly from the shaft portion, and at an angle directed toward the bellows portion. The fastener illustrated is preferably formed as a plurality of individual fasteners extending from the wall 56 at spaced intervals along the seal strip. However, the fastener 58 may be formed by a continuous member extending along the entire length of the seal strip.

To cooperate with the fasteners 58 in Figure 4 of the preferred embodiment, the engagement surface 47 on the vehicle door 22 includes discrete apertures 62 formed through the engagement surface at spaced intervals located for cooperating engagement with the discrete fasteners 58. A cavity 64 and locking surface 66 are preferably provided in association with the discrete apertures 62 in the vehicle door for engagement with the lock member 61 extending from the fastener.

To secure the mounting portion to the vehicle door, the lock member 61 is inserted through the aperture 62 and into the cavity 64. The lock member 61 has sufficient flexibility to enable passage through the aperture with the angled portions of the arrowhead lock member 61 assisting insertion. The lock member 61 also has sufficient rigidity to resist removal of the lock member from the cavity once the lock member is engaged against the lock surface 66 to resist removal. Where the fastener 58 is provided as a continuous member, a continuous slot and associated elongate groove are provided in the vehicle door 22 for cooperating engagement with the fastener strip.

In the further embodiment of the invention illustrated in Figure 5, the mounting portion 12 preferably includes the wall 56, a sealing flap 68, a fastener flap 70, and a fastener 58a. The sealing flap 68 and fastener flap 70 are each preferably integral with the wall 56 of the mounting portion as shown in Figure 5, and spaced such that the fastener flap is positioned at either a right angle, or an acute angle, with respect to the wall 56, and the sealing flap is positioned intermediate the wall and fastener flap.

To cooperate with the fastener 58a, the fastener flap 70 includes an aperture 72 for alignment with aperture 62a formed through the engagement surface 47 on the vehicle door. The apertures 72, 62a are formed at spaced intervals located for cooperating engagement with the fasteners 58a. A cavity 64a and locking surface 66a are preferably provided in association with the apertures 72, 62a, in the vehicle door for engagement with the fastener 58a.

The fastener 58a includes a shaft portion 60a and an arrowhead lock member 61a. The arrowhead lock member 61a extends outwardly from the shaft portion 60a as shown in Figure 5. To secure the mounting portion to the vehicle door, the lock member is inserted through the apertures 72, 62a as described above with respect to the Figure 4 embodiment, so that the lock member is engaged with the lock surface 66a to resist removal from the cavity 64a. Although the fastener 58a is illustrated as discrete and separate from the mounting portion, the fastener may be formed integral with the mounting member, as in the Figure 4 embodiment, or as a continuous strip member extending the length of the magnetic seal strip 10. Where the fastener 58a is provided as a continuous member, a continuous slot and associated elongate groove are provided in the vehicle door 22 for cooperating engagement with the fastener strip.

The seal strip described preferably has a maximum compressed height to position the seal strip intermediate the gap defined by the engagement and sealing surfaces when the vehicle door is latched in closed position. In the embodiments described herein, the maximum compressed height of the magnetic portion and bellows is less than the gap 26, and the free or resting height of the magnetic portion and bellows is preferably greater than the gap 26. Additionally, the maximum expansion height of the bellows portion is also sufficient to enable expansion of the bellows portion to allow the magnetic portion to reach and engage the sealing surface, thereby to bridge the air gap.

The bellows portion, the tube member of the magnetic portion and the mounting portion of the magnetic seal strip 10, are preferably formed from single durometer thermoplastic elastomer material (TPE). The TPE material was selected, for example, for its characteristic ease of extrusion processability and non-marring compatibility with the paints used on the vehicle body 20 and closure panels 22. Using a TPE bellows portion with sufficient flexibility, including low temperature flexibility, enables the bellows portion to provide the seal strip with continuous conforming adjustment and reaching of the magnetic portion to the sealing surface to bridge the gap under magnetic attraction for effective sealing engagement by the magnetic portion. The TPE material used for the bellows portion 18 is also sufficiently rigid to avoid deformation, due to continued compression and expansion, resulting in misalignment of the magnetic portion with respect to the mounting portion.

The elongate, flexible, permanent magnet 16 housed within the mounting portion 12, is preferably formed in the conventional manner of a polymer mixture bonded with a ferrite powder. The polymer mixture is manufactured of materials to provide a magnetic material which is sufficiently bendable and flexible, even under low temperature conditions, to provide the seal strip 10 with the requisite performance characteristics discussed above. One such mixture of commercially available polymers is, for example, a mixture of chlorosulfonated polyethylene and polyisobutylene.

The ferrite powder to be bonded with the polymer mixture may be either a low or high energy powder, depending on the desired magnetic attraction. Where high magnetic attraction is necessary to enable the magnetic portion to expand the bellows portion and bridge the gap to engage the sealing surface, a high energy ferrite, such as strontium ferrite powder is used. Where, however, only a low magnetic strength is needed, a low energy ferrite such as barium ferrite is used. Additionally, mixtures of high and low energy ferrite may be used as appropriate.

To provide the seal strip with the desired performance characteristics, the magnetic attraction of the magnetic portion to the sealing surface must be sufficiently strong to prevent the magnetic portion from lifting off of the sealing surface when the vehicle is travelling at high speeds. The attraction must not, however, prevent the break away of the magnetic portion from the sealing surface during movement of the vehicle door out of the latched position. The determination of the optimum magnetic strength needed, includes, for example, consideration of the air gap, or the distance between the attractions surfaces 17, 17a of the magnets and the associated sealing surface 46, including the thin wall 44 of the magnetic portion, across which the magnet must be attracted. Where the air gap is, for example, approximately 0.018 inches, the seal strip embodiments of the present invention would preferably have an attraction, or "pick-up", for a performance of approximately 0.20 to 0.50 pounds per linear inch.

It will thus be appreciated that the ideal engagement of the seal strip magnetic portion with the sealing surface to minimize the door closing effort, and to resist disengagement of the seal at high vehicle speeds, is determined by consideration of a combination of variables. The variables may include, for example, the flexibility and rigidity of the materials selected for manufacture of the seal strip, the relative parallel relation between the magnetic portion and the sealing surface, the gap to be bridged between the sealing and engagement surfaces, the minimum compressed thickness and maximum expansion height of the seal strip, the air gap through which the magnet must be attracted, and the magnetic strength and pole pattern of the flexible magnet. For ease of mounting when the seal strip is mounted on the closure panel, a series of discontinuous sections of seal strip may be spliced together to form the elongate seal strip extending around the opening 24 within the gap 26. When the seal strip is mounted on the door, for example, splicing the sections together at each of the door corners may provide enhanced ease of installation.

While preferred embodiments of the invention have been illustrated and described in some detail, the present invention should not be considered limited to the precise constructions and techniques disclosed. Various adaptations, modifications and uses of the invention may occur to those skilled in the art to which the invention relates.

## Claims

1. A vehicle seal comprising, a vehicle body having an opening therein for receiving a closure, said body and closure having a latch mechanism for securing said closure to said body covering said opening in latched position, said closure secured to an edge portion of said vehicle body adjacent said opening and on a side of the closure opposite said latch mechanism, said body and closure each having an outer surface adapted to form a substantially smooth vehicle outer surface when said closure is in the latched position,

said opening defined by either an engagement surface or a sealing surface on said adjacent edge portion of the vehicle body, and said closure having an inner edge portion defining the other of said engagement surface or sealing surface of said closure,

said engagement and sealing surfaces defining a gap formed between said surfaces when the closure is in latched position,

a seal strip adapted to bridge the gap between said vehicle body and closure panel when said panel is positioned to cover said opening,

said seal strip including a mounting means, bellows portion and magnetic portion,

said mounting means mounting said seal strip to said engagement surface,

said magnetic portion comprising an elongate tubular member housing a flexible magnet to attract said sealing surface,

said bellows portion comprising flexible first and second legs extending between said mounting means and tubular member in substantially mirror image configuration for providing sufficient reaching of said magnetic portion to bridge said gap and enable positive sealing engagement of said magnetic portion and sealing surface when said closure is in latched position, and

said flexible first and second legs of the bellows portion being constructed to bend for compression intermediate said sealing and engagement surfaces to avoid increased effort required to move the closure to the latched position.

2. A vehicle seal for sealing a vehicle closure panel within an opening of a vehicle body wherein the closure panel is secured to an edge portion of the vehicle body adjacent said opening, and may be latched in a closed position covering the opening by a latch mechanism, and wherein a gap is defined between the closure panel and vehicle body,

said vehicle seal comprising a sealing surface and an engagement surface on either the vehicle body or closure panel, a seal strip mounted on said engagement surface, and adapted to bridge the gap and form a seal between said vehicle body and closure panel when said panel is latched in the closed position,

said seal strip including a mounting portion mounting the seal strip to said engagement surface, a magnetic portion and a bellows portion,

said magnetic portion comprising a flexible tubular member housing an elongate flexible magnet to attract said sealing surface, and

said bellows portion comprising flexible leg members intermediate of and integral with said magnetic portion and mounting portion, having sufficient extension to bridge the gap and enable attraction and sealing engagement between said magnetic portion and sealing surface, and being sufficiently compressible between said sealing and engagement surfaces to substantially avoid interference limiting movement of said closure panel to the closed position.

3. The vehicle seal of claim 2, wherein said bellows portion is positioned intermediate said mounting means and magnetic portion such that said first and second leg portions are each interconnected with said magnetic portion and mounting means and configured to maintain the position of the magnetic portion with respect to said bellows portion and mounting means.

4. The vehicle seal of claim 3, wherein said magnet comprises two flexible elongate permanent magnets, each having a substantially square cross sectional configuration adapted for conforming to rounded portions of the engagement surface.

5. The vehicle seal of claim 4, wherein said mounting means comprises a C-shaped member having gripping fins extending angularly inwardly from interior opposing walls of said C-shaped member for engaging a metal flange extending from said engagement surface, and adapted for gripping the metal flange to resist removal of the flange from the C-shaped member.

6. The vehicle seal of claim 5, wherein said engagement surface comprises the flange extending from said vehicle body, and said sealing surface is on said inner edge portion of the closure panel.

7. The vehicle seal of claim 4, wherein said engagement surface is on said inner edge portion of the closure panel and said engagement surface is on said adjacent edge portion of said vehicle body.

8. The vehicle seal of claims 4 or 7, wherein said mounting means comprises a wall engaged with said bellows portion, and a fastener member extending from said wall in a direction away from the bellows portion, and having lock members extending therefrom for locking engagement with a cooperating aperture formed in said engagement surface.

9. The vehicle seal of claims 4 or 6, wherein said mounting means comprises a wall engaged with said bellows portion, a flap extending from said wall, and a fastener member extending from said flap in a direction away from the bellows portion, and having lock members extending therefrom for locking engagement with a cooperating aperture formed in said engagement surface.

10. A method for sealing a vehicle closure panel with a vehicle body wherein said panel and body include a latch mechanism for securing said panel to said body in a latched position, the body including an opening therein for receiving said vehicle closure panel, said closure panel being secured to an edge portion of the vehicle body adjacent the opening, wherein said method comprises the steps of:

mounting a seal strip having a flexible magnetic portion, a bellows portion and a mounting portion on an engagement surface on one of the edge portion of the vehicle body adjacent the opening or an inner edge portion of the closure panel by engaging said mounting portion with said engagement surface and bending said seal strip to conform to the same edge portion of the vehicle body or inner edge portion of the panel;

moving said closure panel to cover the vehicle body opening;

engaging said flexible magnetic portion of said seal strip with a sealing surface on the other of said edge portion of the vehicle body or inner edge portion of the vehicle closure panel by reaching of said bellows portion under magnetic attraction between said sealing surface and flexible magnetic portion; and

sealing said magnetic portion with said sealing surface with a magnetic attraction providing a fluid tight, air tight seal which remains sealed when air passes over the seal at high velocity.

11. Use, as a seal for sealing between a vehicle door (22) or door opening (24), of an elongate flexible vehicle seal strip (10), comprising:

a mounting portion (12) for securing the strip along its length to an engagement part (34, 64, 64a) in use;

a magnetic sealing portion (14) extending along the strip and having a magnet (16, 16a), for attracting and sealing against a sealing surface (46) in use; and

a flexible bellows portion (18) extending from the mounting portion (12) to the sealing portion (14) to connect them along the strip, whereby they may be moved towards or away from one another with corresponding compression or extension of the bellows portion (18).

12. Use according to claim 11, in which the bellows portion (18) has, in cross-section, first and second flexible legs (48, 50).

13. Use according to claim 12, in which the flexible legs (48, 50) are substantially mirror images of one another.

14. Use according to any one of claims 11 to 13 in which the sealing portion (14) comprises a tube housing the magnet (16, 16a).

FIG. 1

FIG. 2

FIG. 3

FIG. 4

FIG. 5